# EUROPEAN PATENT SPECIFICATION

(11) **EP 4 219 109 B1**
(45) Date of publication and mention of the grant of the patent: **29.04.2026**
(21) Application number: 21871728.8
(22) Date of filing: 24.09.2021
(51) Int. Cl.: B28B 11/04, B32B 37/12, C09J 5/06, B32B 37/18

(54) **METHOD AND DEVICE FOR REINFORCEMENT IN LAMINAR MATERIALS**
VERFAHREN UND VORRICHTUNG ZUR VERSTÄRKUNG IN LAMINAREN MATERIALIEN
PROCÉDÉ ET DISPOSITIF DE RENFORT EN MATÉRIAUX LAMINAIRES

(30) Priority: 24.09.2020 ES 202030961
(43) Date of publication of application: 02.08.2023
(73) Proprietor: Das Tech Solutions, S.L.U., 12006 Castellón de la Plana (ES)
(72) Inventor: ALCACER MARTÍNEZ, Vicente, 12006 Castellón de la Plana (ES)
(74) Representative: ABG Intellectual Property Law, S.L.
(86) International application number: PCT/ES2021/070694
(87) International publication number: WO 2022/064093

(56) References cited:
- EP-A1- 3 072 679
- EP-A1- 3 441 221
- EP-B1- 1 568 747
- EP-B1- 3 441 221
- AT-B- 242 581
- CA-A1- 2 968 517
- ES-A1- 2 208 003
- ES-A1- 2 302 451
- ES-A1- 2 327 090
- ES-T3- 2 297 335
- ES-U- 1 240 594
- ES-U- 1 240 594
- US-A- 2 213 249

## Description

### OBJECT OF THE INVENTION AND TECHNICAL FIELD

The present invention comprises a method for applying a coating or for covering using reinforcement elements, such as meshes or cross-linked fibre fabrics, laminar materials preferably consisting of plates of cementitious or porcelain material commonly used in construction, such as tiles or panels, wherein the invention aims to structurally reinforce said materials, which can have variable formats but preferably comprising a flat shape, and said materials may be formed by different types of substrates and with reliefs.

The present invention is within the field of devices, methods and systems for surface treatment in general, while more specifically being for coating flat construction parts or panels such as porcelain and/or cement sheets, with the aim of providing them with a safety net and greater resistance to bending and breakage for their application in construction and in all types of systems and works.

### BACKGROUND OF THE INVENTION

There are currently systems and methods on the market for the reinforcement of laminar construction materials or panels such as tiles, slabs, plates, or mosaics, by coating same using reinforcement elements and wrapping it using components such as adhesive materials, with the aim of rigidly attaching said reinforcement elements to the laminar materials.

The aim of this method is to reinforce the laminar materials so that they can be used in the construction industry, so that they can withstand external forces of a load greater than what they can withstand without the reinforcement and comprising a safety reinforcement on facades higher than 3 meters, preventing fragments from becoming detached.

Patent document ES2302451 describes a method for reinforcement of materials comprising a process wherein a plastic resin is applied alone, with a mesh and/or with marble or quartz dust, with the aim of providing a product that facilitates adherence. This process is oriented to be used in elements made up of materials such as stone, slate, glass or ceramic. Said patent document ES2302451 does not consider the amount of resin to be coated based on the basic weight of the mesh and does not quantify the difference in the resin needed in terms of materials, roughness of the part, and what is referred to in ceramics as a press rib, which is the relief between the highest points and the bas-relief produced in the pressing process.

A usual method for reinforcement of a laminar material using adhesive material and/or reinforcement sheets or meshes used for the manufacture of ventilated facades includes different steps, such as:
1. Dehydrating of the starting laminar material, with this being is an optional step that is not necessary if said laminar material is dry.
2. Heating the laminar material, only being necessary when using thermoplastic adhesives, like polyurethanes, epoxies or polyesters.
3. Placing a reinforcement mesh on the surface.
4. Applying a layer of adhesive material or resin on the reinforcement mesh either with a spatula, spray or roller.
5. Solidifying the adhesive material in an oven using heat or by applying some type of radiation.

In these steps of the method, problems have been detected at the time of placing the reinforcement mesh on the surface of the laminar material, since if there is no adhesive material on said surface, the reinforcement mesh does not adhere and can be dislodged with respect to the laminar material during its movement, comprising a position not suitable for use. However, if a coating of adhesive material has been applied prior to the placement of the reinforcement mesh, it may cause a spillage of said adhesive material during the placement of the mesh, coupled with the difficulty of positioning, in a proper direction, the fibres of the mesh with respect to the laminar material, in addition to requiring an excess of adhesive material to achieve adherence.

Current methods and systems include various types of families of materials used as adhesives classified with respect to their chemical composition, such as:
- Polyurethanes, traditionally used on ceramics. Part A is Polyal and part B isocyanate, classified as hazardous and even carcinogenic. In addition, its catalyst is hydroscopic and the presence of moisture crystallises the product inside the container, therefore, certain preventive measures are necessary.
- Epoxy, with catalysts of the amino-aliphatic type, traditionally used in natural stone and granite. They are yellowing resins that have the penetrating power for getting into cracks. Their use in ceramics is less reduced, but is possible due to their high adherence and mechanical strength. Their catalyst, aliphatic amines, is toxic and corrosive.
- UV polyester resins, with or without peroxide. These are resins with a high styrene content, which is toxic, and air renewal and localized removal are necessary for use thereof to avoid explosive atmospheres and the operator inhaling the volatile.

In addition to the problems generated, such as toxicities or difficulties of use, by products used as adhesive material, problems are also generated in the process for cleaning the devices. This is a difficulty that arises due to the high adherence of the products used during coating, and the fact that the cleaning products are very specific and the most suitable ones are not always known in each case.

Document EP3072679A1 discloses a method for producing a composite panel, and more particularly a method for reinforcement of laminar materials according to the preamble of claim 1, comprising the step of bonding, and optionally pressing a side of the cover layer (i) covered with cured adhesive (iv) and fabric (ii) to the carrier panel (iii) with an adhesive (v). The invention also relates to the use of the composite panel for cladding facades, walls, floors, floorboards and/or roofs, and to the use of the composite panel as the outer layer of a curtain wall of a building.

Document EP1568747 discloses a method of adhesion of reinforcing meshes or rigid sheets to the back of ceramic tiles, natural stone and mosaic composition of any nature used in building sector, by an adhesive cured with ultraviolet lamps. Reinforcing meshes, rigid or semi-rigid sheets can be of different prefabricated typologies. Adhesion is done by an ultraviolet cured adhesive, whose main characteristics are its great adhesive capacity, its immediate curing, drying and rapid manipulation.

Document US 2213249 A relates to an insulation board and method of making the same and more particularly to an insulation board which is structurally strong, has high resistance to bending stress, is light in weight and possesses good insulating properties, and to a method for economically and efficiently manufacturing the same.

### DESCRIPTION OF THE INVENTION

The present invention improves the performance of systems of this type, seeking to reduce coating product losses, improving the transfer, making the reinforcement treatment of parts and panels of this type more cost-effective, and obtaining a process of manufacturing low thermal load panels.

Based on the aforementioned background, to solve the indicated problems, the invention consists of a method for reinforcement of laminar materials comprising the following steps:
- placing a reinforcement mesh previously coated with an adhesive material, , on the upper surface of the laminar material using a meshing device; and
- solidifying the adhesive material, preferably by applying radiation on said adhesive material, in an oven, thereby rigidly and solidly joining the reinforcement mesh to the laminar material.

In this manner, it is not necessary to apply a previous layer of adhesive material on an upper surface of the laminar material to attach the reinforcement mesh, or a subsequent layer, to secure the attachment, since the reinforcement mesh itself is coated with said adhesive before being positioned on the laminar material. According to the invention, the method also comprises the step of applying a coating of an adhesive material on an upper surface of the laminar material using an applicator device, wherein said step is carried out before solidifying the adhesive material and preferably after the step of placing the reinforcement mesh. In this manner, it is also possible to apply said coating before placing the reinforcement mesh, therefore a step of applying adhesive material on a surface of the laminar material is not incompatible with the step of coating the reinforcement mesh during its placement. Furthermore, it is possible to use different adhesive materials with different properties, if required, both in a prior coating, a subsequent coating or the one used during coating. In other words, with this embodiment, the possibility of applying a coating prior to the placement of the reinforcement mesh is allowed, even if it is coated with adhesive material. Furthermore, it is also possible to apply the coating before and after the placement of the mesh, if necessary. This coating while placing the mesh allows the basic weight of the adhesive material to be directly linked to the basic weight of the reinforcement mesh itself, allowing an excess of neither of them to be necessary to comply with the structural requirements of the final product. According to the invention, the basic weight of the adhesive material applied on the upper surface of the laminar material is proportional to the basic weights of the reinforcement mesh attached on said laminar material in such a way that the basic weight of the adhesive is at least twice the basic weight of the reinforcement mesh. Thus, a mesh of 75+/-5% gr/m2 would need 150-160 gr/m2 of monocomponent adhesive.

In one embodiment, the radiation applied on the adhesive material is selected from ultraviolet radiation and infrared radiation. Said selection preferably depends on the type of adhesive used, for example, if the monocomponent resin is UV or PVC plastisol. In other words, that if the reinforcement mesh is coated with a monocomponent UV resin, solidification is carried out by an UV radiation emission, whereas if the mesh is coated with plastisol PVC, solidification is carried out by infrared emission.

By drying the adhesive, subjected to the indicated conditions, it is possible to facilitate its adherence as well as the strength of the laminar material in construction sites and buildings, avoiding the occurrence of cracks due to the stresses to which they are subjected.

In-depth drying of the treated material is also achieved, providing a great power of adherence of the adhesive material with the laminar material, for the benefit of product quality, and the methods for technical approval and industrial accreditation in the construction sector.

In one embodiment, the adhesive material is a high solids epoxy acrylate polymer with an ultraviolet reaction photoinitiator.

This adhesive material is a monocomponent photoinitiated UV resin preferably comprising a concentration by weight:
- from 50-75% epoxy-acrylate oligomer;
- between 10 and 25% of hexamethylene diacrylate;
- up to 5% 2-hydroxy-2-methylprofenone;
- up to 10% ethyl acetate; and
- up to 1% 2-methoxy-1-methylethyl acetate.

The epoxy acrylate polymer with a high solids content, with an ultraviolet reaction photoinitiator preferably comprises a viscosity of between 60 and 90 seconds, Ford Cup 5, which allows use in a meshing method without post-life times, thus only an ultraviolet dose greater than 300 mJ/cm2 makes it react, without problems of storage and exposure to direct non-solar ambient light, and its viscosity is adjustable by tempering the adhesive at temperatures between 30 and 50 °C.

In another embodiment, the adhesive material is a PVC or plastisol consisting of a mixture of a resin, a plasticiser and other additives in a liquid state at room temperature, with viscoelastic properties, such that, depending on the resin it can have a slightly dilatant or pseudoplastic behaviour, is white in colour but highly dependent on the additives incorporated. The behaviour of this compound changes under the action of heat, with an increase in viscosity at temperatures above 43 °C being noted, and it leaves its initial liquid state to transition to a solid state when cured at a minimum temperature of 160 °C, and with the appropriate additives, it can be subjected to temperatures higher than 230 °C, with no weight loss or change in volume. Plastisol is a suitable material for use as a surface coating since it can be coloured, have textures, and is resistant to abrasion, corrosion and electricity.

In one embodiment, the method comprises the step of pressing and smoothing the reinforcement mesh onto the laminar material, using a smoothing device comprising a pressure doctor blade or a roller; wherein said step is carried out after placing the coated reinforcement mesh on the laminar material and before solidifying the adhesive material; and wherein the smoothing device is assembled in the meshing device.

In this manner, it is possible to secure the reinforcement mesh on the surface of the laminar material, strengthening their union, avoiding or reducing the presence of folds that affect the subsequent operation of said reinforced laminar material.

In one embodiment, the method comprises the steps of:
- checking the state of the laminar material and of the coating of the adhesive material on the upper surface;
- applying a second coating of an adhesive material on the upper surface of the laminar material, preferably using a second section of the applicator device;
wherein said steps are carried out before solidifying the adhesive material and preferably after the step of placing the reinforcement mesh.

In this embodiment, the application of the coating comprises three steps, two of applying a first and a second coating and an intermediate step of checking the first application, in order to know the priming and adherence state of the laminar material and modify the parameters of the second coating based on said state. Similarly, it also allows two different types of adhesive material to be applied to the coating.

In one embodiment, the step of applying a coating of adhesive material on an upper surface of the laminar material using an applicator device comprises the sub-steps of:
- moving the laminar material in a longitudinal direction using an applicator movement means consisting of a conveyor belt:
- detecting the presence of a laminar material in the applicator movement means using a detection photocell barrier, emitter, receiver;
- sizing the width and length of the laminar material detected using the photocell barrier and the movement of the laminar material on the conveyor belt; and
- dosing the adhesive material on the upper surface of the laminar material using a priming means selected from the group consisting of a spray gun, a roller, a spatula and a combination of the above.

With these priming means, a precise volumetric dosing of the coating material and proper mixing are achieved, achieving optimal use of the adhesive material, and providing an automatic and completely homogeneous distribution of the mixture in the element or part to be coated. Furthermore, the detection and sizing of the laminar material allows the amount of adhesive material to be adjusted to the required amount without needing too much surplus.

In this way, problems that cause material losses and excesses when the product is applied with guns or manual application methods are also resolved, such as the resin coating of marble and granite tables, or applications of waxes or waterproofing on panels, mortar plates, the relief and poorly defined geometry of which does not allow the single use of conventional rollers due to surface imperfections.

The dosing system allows the treatment of irregular geometries at their contours or heights in minimal space and in the shortest possible time, looking for the balance between cost-effectiveness and quality of the processed product.

In one embodiment, the step of applying a coating of adhesive material on an upper surface of the laminar material using an applicator device comprises the sub-step of filtering the sprayed adhesive material present in a spray or nebulisation environment through at least one suction port comprising a primary filter and a tray for collecting adhesive material. This embodiment prevents or reduces a toxic environment, and it also allows the reuse of expelled adhesive material that has not adhered to the surface of the laminar material.

In one embodiment, the step of applying a coating of adhesive material on an upper surface of the laminar material using an applicator device comprises the sub-steps of:
- cleaning the movement means using an adjustable pressure doctor blade positioned perpendicular to the conveyor belt; and
- recovering the deposited and cleaned material from the conveyor belt.

In one embodiment, the method comprises the step of transporting the laminar material between the steps of placing a reinforcement mesh, applying a coating of adhesive material, and solidifying the adhesive material; wherein said step is carried out using a transport means selected from: a roller train system, a conveyor belt, a belt, chain or tray conveyor and a combination of the above; and wherein the laminar material is transported in a preferably horizontal position, with the upper surface of the laminar material facing upwards, and a lower surface positioned in contact with the transport means. The automatic transport means facilitate the adhesive material of the coating and the reinforcement mesh not being affected by external factors that may alter their state, as well as the laminar material being transported in a horizontal position.

In one embodiment, the step of transporting the laminar material using the transport means comprises the sub-steps of:
- parameterising the width and length of the laminar material;
- determining the position of the laminar material with respect to the transport means;
wherein said steps are carried out by the combination of the movement of the laminar material by the transport means and by a photocell barrier located in said transport means.

In one embodiment, the first step of the method consists of dehumidifying or drying the laminar material. This step is necessary if the laminar material has a high degree of humidity that makes it difficult for the adhesive material and the reinforcement mesh to adhere.

In one embodiment, the step of placing a reinforcement mesh coated with adhesive material on the upper surface of the laminar material using a meshing device comprises the sub-steps of:
- detecting the entry of a laminar material in the meshing device using a detection photocell;
- moving the laminar material, preferably in a horizontal position, in a longitudinal direction through the meshing device using a movement means of said meshing device;

- unwinding and removing the reinforcement mesh from a reel assembled in the meshing device, using a system of motorised rollers synchronised with the longitudinal movement of the laminar material;
- soaking the reinforcement mesh in adhesive material by means of a resin coating inkwell coupled to the system of motorised rollers;
- spreading the soaked reinforcement mesh across the upper surface of the laminar material, at the same time that it is unwound from the reel using the combined movement of the longitudinal movement of the laminar material and the unwinding of the reel; and
- cutting the unwound reinforcement mesh in a direction perpendicular to the unwinding direction of said reinforcement mesh, using a cutter comprising a guided system and a disc or cutter system that can be moved by said guided system.

This embodiment allows the exact fit of the mesh on the upper surface of the laminar material, without generating an excess of surplus material,

In one embodiment, the reinforcement mesh placed on the laminar material is made of sized glass fibre.

In one embodiment, the reinforcement mesh comprises a basic weight of 50-600 gr/m², preferably between 70 and 80 gr/m². The greater the basic weight of the mesh, the greater the amount of adhesive to be incorporated, comprising, in that case, higher mechanical performance, increased thermal load, but also a greater expense in fuel and cost per surface area.

The advantage is that basic weights of this type, especially the basic weight of the adhesive, and the described method used facilitate the adaptation thereof to current environmental regulations and the reduction of volatile organic components (VOC's), given that as the construction material - substrate and reinforcement - are both solid components once the adhesive hardens, the use of solvents and volatile chemical compounds that are harmful to the environment and of lower performance is reduced in production. It also provides the effect of reducing the propagation phenomenon and the emission of fumes in the calcination process, an important element that is not fulfilled by just any photoinitiated plastic resin.

In one embodiment, the step of solidifying the adhesive material occurs in an ultraviolet radiation oven designed for emitting radiation at an adjustable power of an intensity between 120 and 200 W/cm², and a dose comprised from 400 to 800 mJ/cm².

In one embodiment, the step of solidifying the adhesive material occurs in an infrared radiation oven and wherein said step comprises a cycle of at least one time comprised between 1 and 2 minutes, at a temperature of 160 °C, and an irradiance from 33 w/m² up to 66 w/m².

In one embodiment, the laminar material has a size selected from 300 to 1800 mm wide and from 600 to 4000 mm long. The arrangement of the elements that carry out the method allows reinforcements to be made in large panels, such as 1.8 by 4 meters, but also standard 60x60 cm tiles.

It should be noted that the method for reinforcement is dependent on the material, the thickness of the part, the size of the part, as well as the location thereof. In other words, based on the laminar material to be reinforced and the characteristics thereof, different methods for reinforcement would be used, as well as a different type of mesh basic weight, and therefore a different adhesive basic weight, would be used, or a single or several steps of reinforcement by resin coating would be applied.

### BRIEF DESCRIPTION OF THE FIGURES

For the purpose of helping to better understand the developed system and in relation to a preferred practical exemplary embodiment thereof, a series of drawings is provided in which the following has been depicted:
- Figure 1 shows a perspective view of a system for reinforcing laminar elements comprising three devices connected in series: a meshing device connected, using a movement means, to an adhesive material applicator device, and the latter to a furnace for solidification of the material also connected using a movement means.
- Figure 2 shows a perspective view of a system for reinforcing laminar elements comprising four devices connected in series: a first adhesive material applicator device connected, using a movement means, to the connected meshing device, and the latter also connected, using a movement means, to a second adhesive material applicator device, and the latter to a furnace for solidification of the material, also connected using a movement means, the movement means being a roller transport system.
- Figure 3a shows a perspective view of a meshing device.
- Figure 3b shows a profile view of a meshing device, in which the process of unwinding the reinforcement mesh, the manner in which said reinforcement mesh is coated using an inkwell and its placement on an upper surface of a laminar material can be seen.
- Figure 4a shows a detail view of the profile of a smoothing device consisting of a roller designed for pressing on the reinforcement mesh towards the laminar material.
- Figure 4b shows a perspective view of a smoothing device.
- Figure 4c shows a profile view of a smoothing device.
- Figure 4d shows a perspective view of the smoothing device shown in figure 4c.
- Figure 5a shows a perspective view of an applicator device, where some of its fundamental components can be seen.
- Figure 5b shows a profile view of an applicator device.

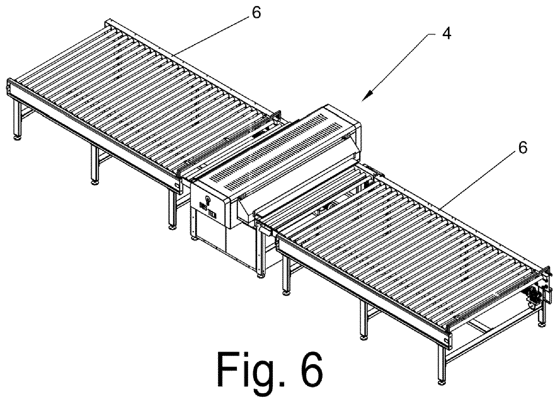

- Figure 6 shows a perspective view of an oven connected to the means for moving the laminar materials.

Listed below are the referenced components used to describe the system and method for reinforcement.
1.- Reinforcement mesh
2.- Laminar material
3.- Meshing device
4.- Oven
5.- Applicator device
6.- Transport means (comprising rollers)
31.- Meshing device of the smoothing device
32.- Detection photocell
33.- Reel
34.- Motorised rollers
35.- Resin coating inkwell
36.- Mesh cutter
51.- Applicator movement means
52.- First applicator device
53.- Second applicator device
54.- Suction port
61.- Photocell barrier

### PREFERRED EMBODIMENT OF THE INVENTION

The preferred embodiment of the invention comprises a method and a system (not claimed) for reinforcement of laminar materials (2), such as tiles, panels or sheets. that can have a small size, such as 30x60 cm, up to great lengths, such as 1.8 x 4 meters, commonly used in construction, with the aim of improving the structural conditions and the resistance to wear and fire of said laminar material (2).

This method can be applied to laminar materials (2) of different types of origins or compositions, but it is especially aimed at plates of cementitious or porcelain material. In other words, its use is not limited to a specific type of material or to a single part, being able to reinforce compositions of elements assembled in a single element.

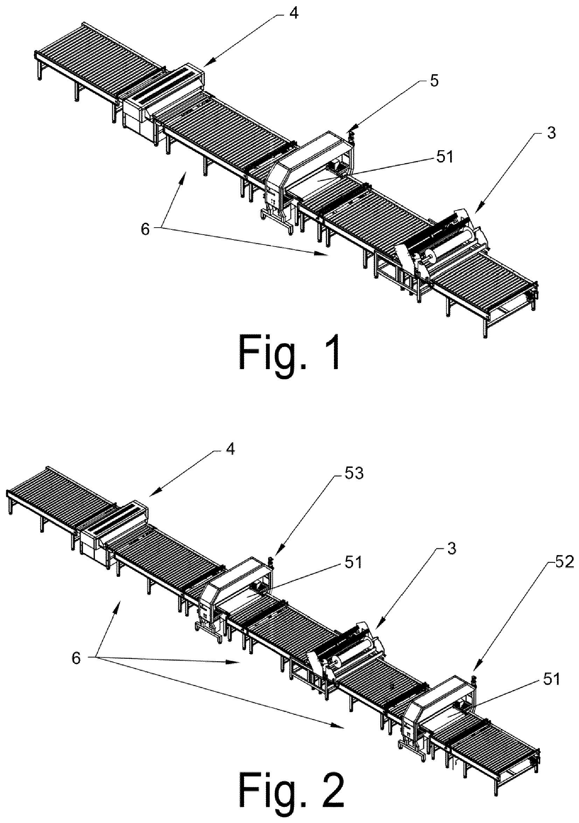

The simplest preferred embodiment of the invention is shown in Figure 1. In it, it is possible to see a system for reinforcement of materials, comprising a meshing device (3), an applicator device (5) and an oven (4) connected using roller transport means (6) designed for moving the laminar material (2) in a horizontal position, with the surface to be reinforced facing upwards, in other words, opposite the surface resting on the transport means (6).

The process of the invention that can be carried out using this system consists of applying, positioning or placing a reinforcement mesh (1) on the upper surface of the laminar material (2), in the meshing device (3), said reinforcement mesh (1) having been coated with an adhesive material using a resin coating inkwell (35), said inkwell (35) being coupled to the meshing device (3) itself.

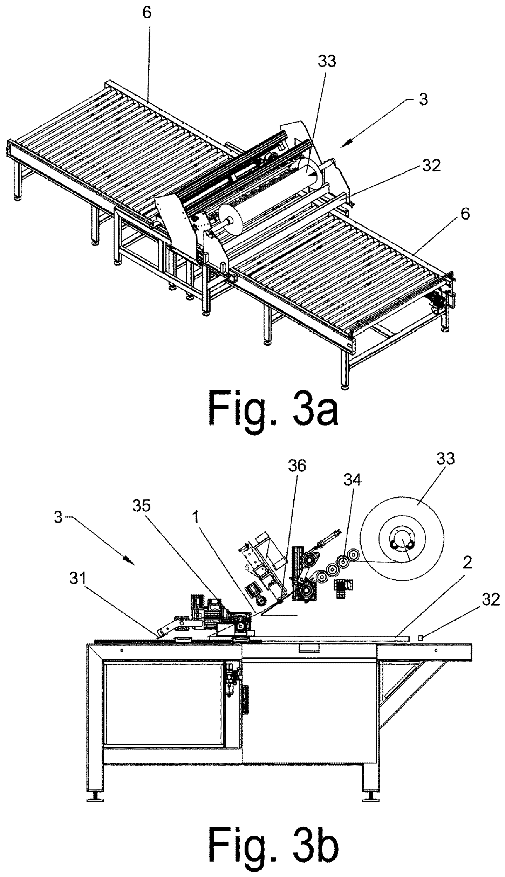

The process of placing the reinforcement mesh (1) is shown in detail in Figure 3b, where a laminar material (2) can be seen arranged horizontally on a movement means of said meshing device (3). The method consists of detecting the presence of said laminar material (2) in the movement means using a detection photocell (32). Once said laminar material (2) has been detected, the unwinding of a reel (33) of reinforcement mesh (1), arranged at a greater height and parallel to the movement means, occurs using motorised rollers (34). These rollers (34) pass the mesh (1) through a resin coating inkwell (35) to be subsequently placed in a gradual and synchronized manner on the upper surface of the laminar material (2). In other words, the unwinding of the mesh (1) from the reel occurs at the same speed at which the reinforcing material (2) moves through the movement means of said meshing device (3). In this way, folds or tensions of the mesh (1) which can cause structural problems to the final product are avoided. Once the length of reinforcement mesh (1) required to cover the upper surface of the laminar material (2) has been determined and unwound, it is cut, using a mesh cutter (36), in a direction perpendicular to the unwinding direction of said reinforcement mesh (1), is passed through the resin coating inkwell (35) and ends up being placed on said upper surface of the laminar material (2).

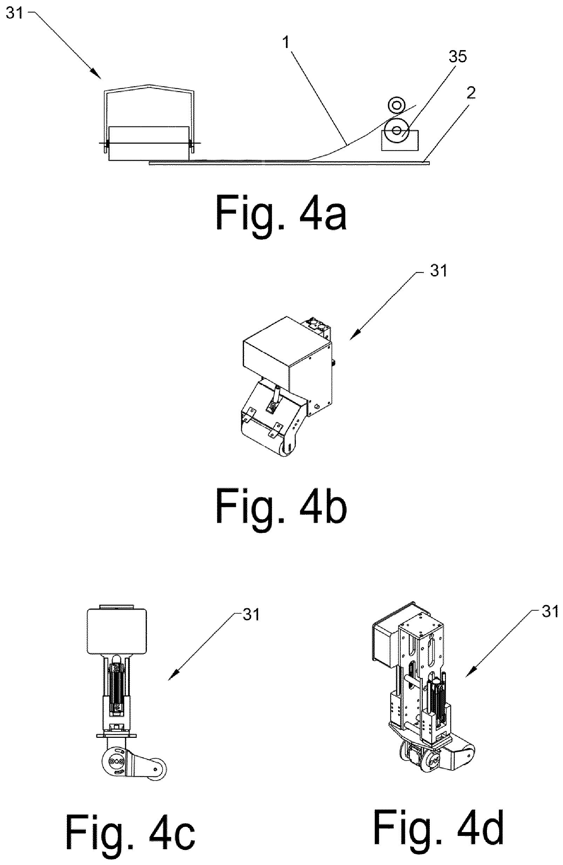

As can be observed in Figure 3 and Figures 4a- 4d, the meshing device also comprises a smoothing device (31) that can be a pressure doctor blade or a mechanised roller, which allows the reinforcement mesh (1) to be correctly attached to the laminar material (2), without causing folds or bubbles that may affect the operation of the final product.

So that the laminar material (2) is correctly oriented with respect to the arrangement of the reinforcement mesh (1) and the transport means of the meshing device (3), the operation of moving the laminar material (2) carried out in the transport means (6) comprises the step of centring and orientation, which is carried out jointly by a photocell barrier (61) that analyses the position and size of the laminar material (2) and by the transport means (6) itself.

In addition to this step of centring and orientation, the photocell barrier (61) together with the transport means (6) performs the step of parameterising the width and length of the laminar material (2), so that it allows the devices that are part of the system to know the shape and size of the laminar material (2) that is to be reinforced.

If necessary, the method for reinforcement may comprise a step for removing the humidity that the laminar material (2) may initially have, said step being prior to the placement of the reinforcement mesh (1). This step is carried out, prior to meshing, using dehumidification equipment connected in series, using transport means (6), with the meshing device (3). In this way, the laminar material (2) is prevented from comprising a degree of humidity that does not allow the adherence of the impregnated adhesive with the reinforcement mesh (1).

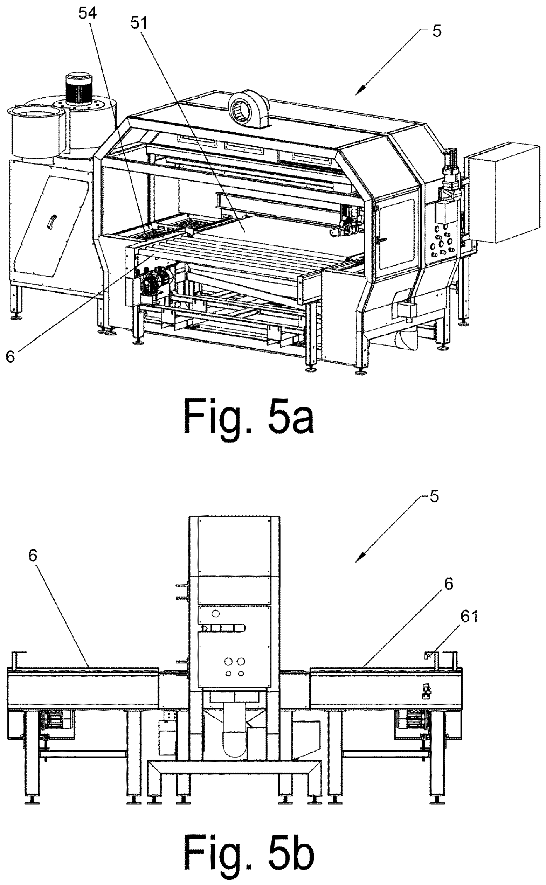

Once the reinforcement mesh (1) coated with adhesive material has been placed on the upper surface of the laminar material (2), the method comprises the step of transferring said laminar material (2), using a section of the transport means (6), to an adhesive applicator device (5), as shown in Figures 5a-5b.

Said applicator device (5) applies a coating of an adhesive material, which can be the same as the one used in the coating of the reinforcement mesh (1), on an upper surface of the laminar material (2). This step can occur in a single step of applying coating on the upper surface of the laminar material (2), in other words, where the reinforcement mesh (1) has been placed, or through three steps: a first coating of adhesive material on said surface, checking the state once the adhesive has been applied, and applying a second coating of adhesive material on that same surface, based on what was determined in the previous step of checking.

Either through one or three steps, the step of applying a coating of an adhesive material comprises the step of moving the laminar material (2) in a longitudinal direction using an applicator movement means (51) which, as can be observed in Figure 5a, consists of a conveyor belt; detecting the presence of a laminar material (2) in the applicator movement means (51) using a detection photocell barrier not shown in the figures; sizing the width and length of the detected laminar material (2); and dosing the adhesive material on the upper surface of the laminar material (2) using a priming means selected from the group consisting of a spray gun, a roller, a spatula and a combination of the above.

If the adhesive material has been applied by spraying, the method comprises the sub-step of filtering the sprayed adhesive material, present in a spray environment of the applicator device (5), through at least one suction port (54) comprising a primary filter and a tray for collecting adhesive material.

In addition to said step of suction and filtering, in the applicator device, the sub-steps of cleaning the movement means (51) are also carried out using an adjustable pressure doctor blade positioned perpendicular to the conveyor belt, in a part opposite the one that transfers the laminar material, and recovering the deposited and cleaned material from the movement means (51). With these steps, the method is clean and does not generate volatile residues that can be hazardous for the user and affect the operation of the system.

In other embodiments, it is possible to carry out an application of a coating of an adhesive material before the reinforcement mesh (1) has been placed on the laminar material (2), as shown in Figure 2. In said embodiment, the adhesive material is applied before and after placing the reinforcement mesh (1) using a first applicator device (52) and a second applicator device (53), respectively. This embodiment allows the application of different types of adhesive materials.

Once the step of applying a coating of an adhesive material on an upper surface of the laminar material (2) has occurred after the placement of the reinforcement mesh (1), said laminar material (2) is led to a UV radiation oven (4) that applies UV radiation on the laminar material (2), curing and stiffening the adhesive material. This radiation is emitted by a UV lamp with an adjustable power of between 120 and 200 W/cm², that can apply a dose comprised between 400 to 800 mJ/cm², which is enough to carry out the curing regardless of the thickness of the adhesive and of the reinforcement mesh (1) placed on the laminar material (2).

For such curing to occur, the adhesive material must be a photoinitiated UV resin, in other words, it must react with said UV radiation. Also, so that the final product is suitable for use and has good structural resistance, resistance to wear and resistance to fire, the basic weight of the adhesive material adhered on the upper surface of the laminar material (2) is proportional to the basic weights of the reinforcement mesh (1) attached on said laminar material (2), being at least the twice the basic weight of reinforcement mesh (1). Preferably, the basic weight of the reinforcement mesh (1) is between 70 and 75 gr/m² so the adhesive material is at least 150 gr/m². Higher basic weights do not provide higher mechanical values, and the thermal load is greater; therefore, both economically and structurally, it is recommended not to exceed 300 gr/m2 between the two components provided.

## Claims

1. A method for reinforcement of laminar materials (2), preferably consisting of plates of cementitious or porcelain material, wherein it comprises the following steps:
- placing a reinforcement mesh (1) previously coated with an adhesive material, on the upper surface of the laminar material (2) using a meshing device (3);
- applying a coating of adhesive material on an upper surface of the laminar material (2) using an applicator device (5); and
- solidifying the adhesive material, preferably by applying radiation on said adhesive material, thereby rigidly and solidly joining the reinforcement mesh (1) to the laminar material (2);
wherein the adhesive material is selected from the group comprising a monocomponent UV resin, made up of a high solids epoxy acrylate polymer with an ultraviolet reaction photoinitiator, and a PVC plastisol;
**characterized in that** the step of solidifying the adhesive material occurs in an oven;
**in that** the step of applying a coating of the adhesive material is carried out before the step of solidifying the adhesive material and preferably after the step of placing the reinforcement mesh (1);
and **in that** the basic weight of the adhesive material adhered on the upper surface of the laminar material (2) is proportional to the basic weight of the reinforcement mesh (1) attached on said laminar material (2) in such a way that the basic weight of the adhesive is at least twice the basic weight of reinforcement mesh (1).

2. The method for reinforcement according to claim 1, comprising the step of:
- pressing and smoothing the reinforcement mesh (1) onto the laminar material (2) using a smoothing device (31) comprising a pressure doctor blade or a roller;
wherein said step is carried out after placing the coated reinforcement mesh (1) on the laminar material (2) and before solidifying the adhesive material; and
wherein the smoothing device (31) is assembled in the meshing device (3).

3. The method for reinforcement according to claim 1 or 2, comprising the steps of:
- checking the state of the laminar material (2) and of the coating of the adhesive material on the upper surface;
- applying a second coating of an adhesive material on the upper surface of the laminar material (2);
wherein said steps are carried out before solidifying the adhesive material and preferably after the step of placing the reinforcement mesh (1).

4. The method for reinforcement according to any of the preceding claims, wherein the step of applying a coating of adhesive material on an upper surface of the laminar material using an applicator device (5) comprises the sub-steps of:
- moving the laminar material (2) in a longitudinal direction using an applicator movement means (51) consisting of a conveyor belt;
- detecting the presence of a laminar material (2) in the applicator movement means using a detection photocell barrier, emitter, receiver;
- sizing the width and length of the laminar material detected using the photocell barrier and the movement of the laminar material (2) in the applicator movement means (51);
- dosing the adhesive material on the upper surface of the laminar material (2) using a priming means selected from the group consisting of a spray gun, a roller, a spatula and a combination of the above;
wherein the step of applying a coating of adhesive material on an upper surface of the laminar material (2) using an applicator device (5) preferably comprises the sub-step of filtering the sprayed adhesive material present in a spray environment through at least one suction port (54) comprising a primary filter and a tray for collecting adhesive material.

5. The method for reinforcement according to claim 4, wherein the step of applying a coating of adhesive material on an upper surface of the laminar material (2) using an applicator device (5) comprises the sub-steps of:
- cleaning the movement means (51) using an adjustable pressure doctor blade positioned perpendicular to the conveyor belt;
- recovering the deposited and cleaned material from the movement means (51).

6. The method for reinforcement according to any of the preceding claims, comprising the step of transporting the laminar material (2) between the steps of placing a reinforcement mesh (1), applying a coating of adhesive material, and solidifying the adhesive material; wherein said step of transporting the laminar material (2) is carried out using a transport means (6) selected from among: a roller train system, a conveyor belt, a belt, chain or tray conveyor and a combination of the above; and
wherein the laminar material (2) is transported in a preferably horizontal position, with the upper surface of the laminar material (2) facing upwards, and a lower surface positioned in contact with the transport means (6).
wherein the step of transporting the laminar material (2) using the transport means (6) preferably comprises the sub-steps of:
- parameterising the width and length of the laminar material (2);
- determining the position of the laminar material (2) with respect to the transport means (6);
and wherein said steps are carried out by the combination of the movement of the laminar material (2) by the transport means (6) and by a photocell barrier (61) located in said transport means (6).

7. The method for reinforcement according to any of the preceding claims, wherein the step of placing a reinforcement mesh (1) coated with adhesive material on the upper surface of the laminar material (2) using a meshing device (3) comprises the sub-steps of:
- detecting the entry of a laminar material (2) in the meshing device (3) using a detection photocell (32);
- moving the laminar material (2), preferably in a horizontal position, in a longitudinal direction through the meshing device (3) using a movement means of said meshing device (3);
- unwinding and removing the reinforcement mesh (1) from a reel (33) assembled in the meshing device (3), using a system of motorised rollers (34) synchronised with the longitudinal movement of the laminar material (2);
- soaking the reinforcement mesh (1) in adhesive material by means of a resin coating inkwell (35) coupled to the system of motorised rollers (34);
- spreading the soaked reinforcement mesh (1) across the upper surface of the laminar material (2), at the same time that it is unwound from the reel (33) using the combined movement of the longitudinal movement of the laminar material (2) and the unwinding of the reel (33); and
- cutting the unwound reinforcement mesh (1) in a direction perpendicular to the unwinding direction of said reinforcement mesh (1), using a mesh cutter (36) comprising a guided system and a disc or cutter system that can be moved by said guided system.

8. The method for reinforcement according to any of the preceding claims, wherein the reinforcement mesh (1) comprises a basic weight of 50-600 gr/m², preferably between 70 and 80 gr/m².

9. The method for reinforcement according to claim 1, wherein the step of solidifying the adhesive material occurs in an ultraviolet radiation oven (4) designed for emitting radiation at an adjustable power of between 120 and 200 W/cm², and a dose comprised from 400 to 800 mJ/cm², wherein said oven (4) comprises at least one ultraviolet lamp.

10. The method according to claim 1, wherein the step of solidifying the adhesive material occurs in an infrared radiation oven (4) and wherein said step comprises a cycle of at least one time comprised between 1 and 2 minutes, at a temperature of 160 °C, and an irradiance from 33 w/m2 up to 66 w/m2.

11. The method for reinforcement according to any of the preceding claims, wherein the laminar material (2) has a size selected from 300 to 1800 mm wide and from 600 to 4000 mm long.

## Patentansprüche

1. Ein Verfahren zur Verstärkung von laminaren Materialien (2), vorzugsweise bestehend aus Platten aus zementhaltigem oder porzellanartigem Material, wobei es die folgenden Schritte umfasst:
- Platzieren eines zuvor mit einem Klebermaterial beschichteten Verstärkungsnetzes (1) auf der Oberseite des laminaren Materials (2) unter Verwendung einer Vernetzungsvorrichtung (3);
- Aufbringen einer Beschichtung aus Klebermaterial auf eine Oberseite des laminaren Materials (2) unter Verwendung einer Auftragsvorrichtung (5); und
- Verfestigen des Klebermaterials, vorzugsweise durch Anlegen von Strahlung an das Klebermaterial, wodurch das Verstärkungsnetz (1) starr und fest mit dem laminaren Material (2) verbunden wird;
wobei das Klebermaterial ausgewählt ist aus der Gruppe, die ein einkomponentiges UV-Harz, gebildet aus einem hochfeststoffhaltigen Epoxyacrylatpolymer mit einem Photoinitiator für eine Ultraviolettreaktion, und ein PVC-Plastisol umfasst;
**dadurch gekennzeichnet, dass** der Schritt des Verfestigens des Klebermaterials in einem Ofen erfolgt;
dass der Schritt des Aufbringens einer Beschichtung des Klebermaterials vor dem Schritt des Verfestigens des Klebermaterials und vorzugsweise nach dem Schritt des Platzierens des Verstärkungsnetzes (1) durchgeführt wird;
und dass das Basisgewicht des auf der Oberseite des laminaren Materials (2) haftenden Klebermaterials proportional zu dem Basisgewicht des auf dem laminaren Material (2) angebrachten Verstärkungsnetzes (1) ist, und zwar in der Weise, dass das Basisgewicht des Klebers mindestens das Zweifache des Basisgewichts des Verstärkungsnetzes (1) beträgt.

2. Das Verfahren zur Verstärkung nach Anspruch 1, das den Schritt umfasst:
- Andrücken und Glätten des Verstärkungsnetzes (1) auf das laminare Material (2) unter Verwendung einer Glättvorrichtung (31), die eine Druckrakel oder eine Walze umfasst;
wobei dieser Schritt nach dem Platzieren des beschichteten Verstärkungsnetzes (1) auf dem laminaren Material (2) und vor dem Verfestigen des Klebermaterials durchgeführt wird; und
wobei die Glättvorrichtung (31) in der Vernetzungsvorrichtung (3) montiert ist.

3. Das Verfahren zur Verstärkung nach Anspruch 1 oder 2, das die folgenden Schritte umfasst:
- Prüfen des Zustands des laminaren Materials (2) und der Beschichtung des Klebermaterials auf der Oberseite;
- Aufbringen einer zweiten Beschichtung eines Klebermaterials auf die Oberseite des laminaren Materials (2);
wobei diese Schritte vor dem Verfestigen des Klebermaterials und vorzugsweise nach dem Schritt des Platzierens des Verstärkungsnetzes (1) durchgeführt werden.

4. Das Verfahren zur Verstärkung nach einem der vorhergehenden Ansprüche, wobei der Schritt des Aufbringens einer Beschichtung aus Klebermaterial auf eine Oberseite des laminaren Materials unter Verwendung einer Auftragsvorrichtung (5) die folgenden Teilschritte umfasst:
- Bewegen des laminaren Materials (2) in einer Längsrichtung unter Verwendung eines Auftrag-Bewegungsmittels (51), das aus einem Förderband besteht;
- Erfassen des Vorhandenseins eines laminaren Materials (2) in dem Auftrag-Bewegungsmittel unter Verwendung einer Erfassungs-Lichtschranke, eines Senders und eines Empfängers;
- Bemessen der Breite und Länge des erfassten laminaren Materials unter Verwendung der Lichtschranke und der Bewegung des laminaren Materials (2) in dem Auftrag-Bewegungsmittel (51);
- Dosieren des Klebermaterials auf der Oberseite des laminaren Materials (2) unter Verwendung eines Grundierungsmittels, das aus der Gruppe ausgewählt ist, die aus einer Sprühpistole, einer Walze, einem Spatel und einer Kombination des Vorstehenden besteht;
wobei der Schritt des Aufbringens einer Beschichtung aus Klebermaterial auf eine Oberseite des laminaren Materials (2) unter Verwendung einer Auftragsvorrichtung (5) vorzugsweise den Teilschritt des Filterns des in einer Sprühumgebung vorhandenen versprühten Klebermaterials durch mindestens eine Saugöffnung (54) umfasst, die einen Primärfilter und eine Wanne zum Sammeln von Klebermaterial umfasst.

5. Das Verfahren zur Verstärkung nach Anspruch 4, wobei der Schritt des Aufbringens einer Beschichtung aus Klebermaterial auf eine Oberseite des laminaren Materials (2) unter Verwendung einer Auftragsvorrichtung (5) die folgenden Teilschritte umfasst:
- Reinigen des Bewegungsmittels (51) unter Verwendung einer einstellbaren Druckrakel, die senkrecht zu dem Förderband angeordnet ist;
- Rückgewinnen des auf dem Bewegungsmittel (51) abgelagerten und gereinigten Materials.

6. Das Verfahren zur Verstärkung nach einem der vorhergehenden Ansprüche, das den Schritt des Transportierens des laminaren Materials (2) zwischen den Schritten des Platzierens eines Verstärkungsnetzes (1), des Aufbringens einer Beschichtung aus Klebermaterial und des Verfestigens des Klebermaterials umfasst; wobei der Schritt des Transportierens des laminaren Materials (2) unter Verwendung eines Transportmittels (6) durchgeführt wird, der ausgewählt ist aus: einem Rollenbahnsystem, einem Förderband, einem Band-, Ketten- oder Plattenförderer und einer Kombination des Vorstehenden; und
wobei das laminare Material (2) vorzugsweise in einer horizontalen Position transportiert wird, wobei die Oberseite des laminaren Materials (2) nach oben weist und eine Unterseite in Kontakt mit dem Transportmittel (6) angeordnet ist;
wobei der Schritt des Transportierens des laminaren Materials (2) unter Verwendung des Transportmittels (6) vorzugsweise die folgenden Teilschritte umfasst:
- Parametrisieren der Breite und Länge des laminaren Materials (2);
- Bestimmen der Position des laminaren Materials (2) in Bezug auf das Transportmittel (6);
und wobei diese Schritte durch die Kombination der Bewegung des laminaren Materials (2) durch das Transportmittel (6) und durch eine in dem Transportmittel (6) angeordnete Lichtschranke (61) durchgeführt werden.

7. Das Verfahren zur Verstärkung nach einem der vorhergehenden Ansprüche, wobei der Schritt des Platzierens eines mit Klebermaterial beschichteten Verstärkungsnetzes (1) auf der Oberseite des laminaren Materials (2) unter Verwendung einer Vernetzungsvorrichtung (3) die folgenden Teilschritte umfasst:
- Erfassen des Eintritts eines laminaren Materials (2) in die Vernetzungsvorrichtung (3) unter Verwendung einer Erfassungs-Lichtschranke (32);
- Bewegen des laminaren Materials (2), vorzugsweise in einer horizontalen Position, in einer Längsrichtung durch die Vernetzungsvorrichtung (3) unter Verwendung eines Bewegungsmittels der Vernetzungsvorrichtung (3);
- Abwickeln und Entfernen des Verstärkungsnetzes (1) von einer in der Vernetzungsvorrichtung (3) montierten Rolle (33) unter Verwendung eines Systems motorisierter Walzen (34), das mit der Längsbewegung des laminaren Materials (2) synchronisiert ist;
- Tränken des Verstärkungsnetzes (1) mit Klebermaterial mittels eines Harzbeschichtungsbeckens (35), das mit dem System motorisierter Walzen (34) gekoppelt ist;
- Verteilen des getränkten Verstärkungsnetzes (1) über die Oberseite des laminaren Materials (2), gleichzeitig mit seinem Abwickeln von der Rolle (33), unter Verwendung der kombinierten Bewegung der Längsbewegung des laminaren Materials (2) und des Abwickelns der Rolle (33); und
- Schneiden des abgewickelten Verstärkungsnetzes (1) in einer Richtung senkrecht zu der Abwickelrichtung des Verstärkungsnetzes (1), unter Verwendung eines Netzschneiders (36), der ein Führungssystem und ein durch das Führungssystem bewegbares Scheiben- oder Schneidsystem umfasst.

8. Das Verfahren zur Verstärkung nach einem der vorhergehenden Ansprüche, wobei das Verstärkungsnetz (1) ein Basisgewicht von 50-600 gr/m², vorzugsweise zwischen 70 und 80 gr/m², umfasst.

9. Das Verfahren zur Verstärkung nach Anspruch 1, wobei der Schritt des Verfestigens des Klebermaterials in einem Ultraviolettstrahlungsofen (4) erfolgt, der zum Emittieren von Strahlung mit einer einstellbaren Leistung von zwischen 120 und 200 W/cm² und einer Dosis von 400 bis 800 mJ/cm² ausgelegt ist, wobei der Ofen (4) mindestens eine Ultraviolettlampe umfasst.

10. Das Verfahren nach Anspruch 1, wobei der Schritt des Verfestigens des Klebermaterials in einem Infrarotstrahlungsofen (4) erfolgt und wobei dieser Schritt einen Zyklus umfasst, der mindestens eine Zeitdauer zwischen 1 und 2 Minuten bei einer Temperatur von 160 °C und einer Bestrahlungsstärke von 33 w/m2 bis 66 w/m2 umfasst.

11. Das Verfahren zur Verstärkung nach einem der vorhergehenden Ansprüche, wobei das laminare Material (2) eine Größe aufweist, die ausgewählt ist aus 300 bis 1800 mm Breite und 600 bis 4000 mm Länge.

## Revendications

1. Un procédé de renforcement de matériaux laminaires (2), de préférence constitués de plaques de matériau cimentaire ou en porcelaine, dans lequel il comprend les étapes suivantes :
- le placement d'un maillage de renforcement (1) préalablement revêtu d'un matériau adhésif, sur la surface supérieure du matériau laminaire (2) à l'aide d'un dispositif de maillage (3) ;
- l'application d'un revêtement de matériau adhésif sur une surface supérieure du matériau laminaire (2) à l'aide d'un dispositif applicateur (5) ; et
- la solidification du matériau adhésif, de préférence en appliquant un rayonnement sur ledit matériau adhésif, assemblant ainsi rigidement et solidement le maillage de renforcement (1) au matériau laminaire (2) ;
dans lequel le matériau adhésif est sélectionné dans le groupe comprenant une résine UV monocomposante, constituée d'un polymère d'acrylate époxy à haute teneur en solides avec un photo-initiateur de réaction aux ultraviolets, et d'un plastisol PVC ;
**caractérisé en ce que** l'étape de solidification du matériau adhésif a lieu dans un four ;
**en ce que** l'étape d'application d'un revêtement du matériau adhésif est réalisée avant l'étape de solidification du matériau adhésif et de préférence après l'étape de placement du maillage de renforcement (1) ;
et **en ce que** le poids de base du matériau adhésif collé sur la surface supérieure du matériau laminaire (2) est proportionnel au poids de base du maillage de renforcement (1) fixé sur ledit matériau laminaire (2) de telle sorte que le poids de base de l'adhésif est au moins deux fois le poids de base du maillage de renforcement (1).

2. Le procédé de renforcement selon la revendication 1, comprenant l'étape consistant à :
- presser et lisser le maillage de renforcement (1) sur le matériau laminaire (2) à l'aide d'un dispositif de lissage (31) comprenant une racle à pression ou un rouleau ;
dans lequel ladite étape est réalisée après le placement du maillage de renforcement (1) revêtu sur le matériau laminaire (2) et avant la solidification du matériau adhésif ; et dans lequel le dispositif de lissage (31) est assemblé dans le dispositif de maillage (3).

3. Le procédé de renforcement selon la revendication 1 ou 2, comprenant les étapes consistant à :
- vérifier l'état du matériau laminaire (2) et du revêtement du matériau adhésif sur la surface supérieure ;
- appliquer un second revêtement d'un matériau adhésif sur la surface supérieure du matériau laminaire (2) ;
dans lequel lesdites étapes sont réalisées avant la solidification du matériau adhésif et de préférence après l'étape de placement du maillage de renforcement (1).

4. Le procédé de renforcement selon l'une quelconque des revendications précédentes, dans lequel l'étape d'application d'un revêtement de matériau adhésif sur une surface supérieure du matériau laminaire à l'aide d'un dispositif applicateur (5) comprend les sous-étapes consistant à :
- déplacer le matériau laminaire (2) dans une direction longitudinale à l'aide d'un moyen de déplacement d'applicateur (51) constitué d'une courroie convoyeuse ;
- détecter la présence d'un matériau laminaire (2) dans le moyen de déplacement d'applicateur à l'aide d'une barrière à cellule photoélectrique de détection, d'un émetteur, d'un récepteur ;
- dimensionner la largeur et la longueur du matériau laminaire détecté à l'aide de la barrière à cellule photoélectrique et du déplacement du matériau laminaire (2) dans le moyen de déplacement d'applicateur (51) ;
- doser le matériau adhésif sur la surface supérieure du matériau laminaire (2) à l'aide d'un moyen d'amorçage sélectionné dans le groupe constitué d'un pistolet pulvérisateur, d'un rouleau, d'une spatule et d'une combinaison de ceux-ci ;
dans lequel l'étape d'application d'un revêtement de matériau adhésif sur une surface supérieure du matériau laminaire (2) à l'aide d'un dispositif applicateur (5) comprend de préférence la sous-étape de filtrage du matériau adhésif pulvérisé présent dans un environnement de pulvérisation à travers au moins un orifice d'aspiration (54) comprenant un filtre primaire et un plateau pour collecter le matériau adhésif.

5. Le procédé de renforcement selon la revendication 4, dans lequel l'étape d'application d'un revêtement de matériau adhésif sur une surface supérieure du matériau laminaire (2) à l'aide d'un dispositif applicateur (5) comprend les sous-étapes consistant à :
- nettoyer les moyens de déplacement (51) à l'aide d'une racle à pression réglable positionnée perpendiculairement à la courroie convoyeuse ;
- récupérer le matériau déposé et nettoyé à partir du moyen de déplacement (51).

6. Le procédé de renforcement selon l'une quelconque des revendications précédentes, comprenant l'étape de transport du matériau laminaire (2) entre les étapes de placement d'un maillage de renforcement (1), d'application d'un revêtement de matériau adhésif et de solidification du matériau adhésif ; dans lequel ladite étape de transport du matériau laminaire (2) est réalisée à l'aide d'un moyen de transport (6) sélectionné parmi : un système de train de rouleaux, une courroie convoyeuse, une courroie, une chaîne ou un convoyeur à plateaux et une combinaison de ceux-ci ; et
dans lequel le matériau laminaire (2) est transporté dans une position de préférence horizontale, avec la surface supérieure du matériau laminaire (2) orientée vers le haut, et une surface inférieure positionnée au contact du moyen de transport (6),
dans lequel l'étape de transport du matériau laminaire (2) à l'aide du moyen de transport (6) comprend de préférence les sous-étapes consistant à :
- paramétrer la largeur et la longueur du matériau laminaire (2) ;
- déterminer la position du matériau laminaire (2) par rapport au moyen de transport (6) ;
et dans lequel lesdites étapes sont réalisées par la combinaison du déplacement du matériau laminaire (2) par le moyen de transport (6) et par une barrière à cellule photoélectrique (61) située dans ledit moyen de transport (6).

7. Le procédé de renforcement selon l'une quelconque des revendications précédentes, dans lequel l'étape de placement d'un maillage de renforcement (1) revêtu de matériau adhésif sur la surface supérieure du matériau laminaire (2) à l'aide d'un dispositif de maillage (3) comprend les sous-étapes consistant à :
- détecter l'entrée d'un matériau laminaire (2) dans le dispositif de maillage (3) à l'aide d'une cellule photoélectrique de détection (32) ;
- déplacer le matériau laminaire (2), de préférence en position horizontale, dans une direction longitudinale à travers le dispositif de maillage (3) à l'aide d'un moyen de déplacement dudit dispositif de maillage (3) ;
- dérouler et retirer le maillage de renforcement (1) d'une bobine (33) assemblée dans le dispositif de maillage (3), à l'aide d'un système de rouleaux motorisés (34) synchronisés avec le déplacement longitudinal du matériau laminaire (2) ;
- tremper le maillage de renforcement (1) dans le matériau adhésif au moyen d'un encrier de revêtement en résine (35) couplé au système de rouleaux motorisés (34) ;
- étaler le maillage de renforcement (1) trempé à travers la surface supérieure du matériau laminaire (2), en même temps qu'il est déroulé de la bobine (33) à l'aide du déplacement combiné du déplacement longitudinal du matériau laminaire (2) et du déroulement de la bobine (33) ; et
- découper le maillage de renforcement (1) déroulé dans une direction perpendiculaire à la direction de déroulement dudit maillage de renforcement (1), à l'aide d'un couteau de maillage (36) comprenant un système guidé et un disque ou système de couteau pouvant être déplacé par ledit système guidé.

8. Le procédé de renforcement selon l'une quelconque des revendications précédentes, dans lequel le maillage de renforcement (1) comprend un poids de base de 50-600 gr/m², de préférence compris entre 70 et 80 gr/m².

9. Le procédé de renforcement selon la revendication 1, dans lequel l'étape de solidification du matériau adhésif a lieu dans un four à rayonnement ultraviolet (4) conçu pour émettre un rayonnement à une puissance réglable comprise entre 120 et 200 W/cm², et une dose comprise de 400 à 800 mJ/cm², dans lequel ledit four (4) comprend au moins une lampe ultraviolette.

10. Le procédé selon la revendication 1, dans lequel l'étape de solidification du matériau adhésif a lieu dans un four à rayonnement infrarouge (4) et dans lequel ladite étape comprend un cycle d'au moins une durée comprise entre 1 et 2 minutes, à une température de 160 °C, et une irradiance de 33 w/m2 jusqu'à 66 w/m2.

11. Le procédé de renforcement selon l'une quelconque des revendications précédentes, dans lequel le matériau laminaire (2) présente une taille sélectionnée de 300 à 1800 mm de large et de 600 à 4000 mm de long.
